# EUROPEAN PATENT APPLICATION

(11) **EP 4 503 476 A1**
(43) Date of publication of application: **05.02.2025**
(21) Application number: 23774033.7
(22) Date of filing: 24.03.2023
(51) Int. Cl.: H04B 7/22

(54) **BACKSCATTER COMMUNICATION METHOD, AND DEVICE AND NETWORK-SIDE DEVICE**

(30) Priority: 25.03.2022 CN 202210301786
(71) Applicant: VIVO MOBILE COMMUNICATION CO., LTD., Dongguan, Guangdong 523863 (CN)
(72) Inventor: HUANG, Wei, Dongguan, Guangdong 523863 (CN); JIANG, Dajie, Dongguan, Guangdong 523863 (CN)
(74) Representative: Shieldmark
(86) International application number: PCT/CN2023/083897
(87) International publication number: WO 2023/179790

(57) **Abstract**

This application discloses a backscatter communication method and device and a network side device, and relates to the field of communication technologies. The backscatter communication method in embodiments of this application includes: obtaining, by a first device, target configuration information, where the target configuration information includes backscatter communication BSC-related configuration information; and performing, by the first device, the backscatter communication with a second device according to the target configuration information, where the second device is a device that modulates to-be-transmitted information on a target carrier provided by a device other than the second device for transmission.

## Description

### CROSS-REFERENCE TO RELATED APPLICATIONS

The present disclosure claims the priority to Chinese Patent Application No. 202210301786.5, entitled "BACKSCATTER COMMUNICATION METHOD AND DEVICE AND NETWORK SIDE DEVICE", filed with China National Intellectual Property Administration (CNIPA) on March 25, 2022, which is incorporated herein by reference in its entirety.

### TECHNICAL FIELD

This application relates to the field of communication technologies, and in particular, to a backscatter communication method and device and a network side device.

### BACKGROUND

A future 6th Generation (6th Generation, 6G) communication network needs to support the Internet of everything, and a quantity of Internet of Things devices involved may reach a level of 100 billion. The connection density is improved by 10 to 100 times compared with a 5th Generation (5th Generation, 5G) communication network, and reaches a connection density of 10 to 100 per square meter (square meter, m²).

Cellular networking, low cost, low power consumption or even zero power consumption, and passivation are major trends in the development of Internet of Things devices in the future. However, using a passive terminal as an example, considering that the passive terminal is limited by power consumption and hardware capabilities thereof, a communication transmission distance thereof is mostly below 10 meters, far from meeting the objective of cellular coverage of 100 meters. Therefore, how to implement effective management of Internet of Things devices such as the passive terminal becomes a problem that needs to be resolved currently.

### SUMMARY

Embodiments of this application provide a backscatter communication method and device and a network side device, which can implement effective management of a large quantity of Internet of Things devices based on backscatter transmission.

According to a first aspect, a backscatter communication method is provided, including: obtaining, by a first device, target configuration information, where the target configuration information includes backscatter communication BSC-related configuration information; and performing, by the first device, the backscatter communication with a second device according to the target configuration information, where the second device is a device that modulates to-be-transmitted information on a target carrier provided by a device other than the second device for transmission.

According to a second aspect, a backscatter communication method is provided, including: transmitting, by a network side device, target configuration information to a first device, where the target configuration information includes backscatter communication BSC-related configuration information, and the target configuration information is used for the backscatter communication with a second device by the first device, where the second device is a device that modulates to-be-transmitted information on a target carrier provided by a device other than the second device for transmission.

According to a third aspect, a backscatter communication method is provided, including any one of the following: receiving, by a second device, second signaling transmitted by a first device, where the second signaling includes at least BSC-related configuration information or BSC-related control information; or receiving, by a second device, third signaling transmitted by a network side device, where the third signaling includes at least BSC-related configuration information or B SC-related control information, where the second device is a device that modulates to-be-transmitted information on a target carrier provided by a device other than the second device for transmission; and performing, by the second device, backscatter transmission based on the BSC-related configuration information or the BSC-related control information.

According to a fourth aspect, a backscatter communication apparatus is provided, including: an obtaining module, configured to obtain target configuration information, where the target configuration information includes backscatter communication BSC-related configuration information; and a communication module, configured to perform the backscatter communication with a second device according to the target configuration information, where the second device is a device that modulates to-be-transmitted information on a target carrier provided by a device other than the second device for transmission.

According to a fifth aspect, a backscatter communication apparatus is provided, including: a first transmission module, configured to transmit target configuration information to a first device, where the target configuration information includes backscatter communication BSC-related configuration information, and the target configuration information is used for the backscatter communication with a second device by the first device, where the second device is a device that modulates to-be-transmitted information on a target carrier provided by a device other than the second device for transmission.

According to a sixth aspect, a backscatter communication apparatus is provided, including: a second transmission module, configured to receive second signaling transmitted by a first device, where the second signaling includes at least BSC-related configuration information or BSC-related control information; or receive third signaling transmitted by a network side device, where the third signaling includes at least BSC-related configuration information or BSC-related control information, where the second transmission module is further configured to perform backscatter transmission based on the BSC-related configuration information or the BSC-related control information.

According to a seventh aspect, a device is provided, including a processor and a memory, where the memory stores a program or an instruction executable on the processor, and the program or the instruction, when executed by the processor, implements the steps of the method according to the first aspect or the third aspect.

According to an eighth aspect, a device is provided, including a processor and a communication interface, where the communication interface is coupled to the processor, and the processor is configured to run a program or an instruction to implement the steps of the method according to the first aspect or the third aspect.

According to a ninth aspect, a network side device is provided, where the network side device includes a processor and a memory, the memory stores a program or an instruction executable on the processor, and the program or the instruction, when executed by the processor, implements the steps of the method according to the second aspect.

According to a tenth aspect, a network side device is provided, including a processor and a communication interface, where the communication interface is coupled to the processor, and the processor is configured to run a program or an instruction to implement the steps of the method according to the second aspect.

According to an eleventh aspect, a backscatter communication system is provided, including: a first device, a second device, and a network side device. The first device may be configured to perform the steps of the directional scattering communication method according to the first aspect. The second device may be configured to perform the steps of the directional scattering communication method according to the third aspect. The network side device may be configured to perform the steps of the backscatter communication method according to the second aspect.

According to a twelfth aspect, a readable storage medium is provided, where the readable storage medium stores a program or an instruction, and the program or the instruction, when executed by a processor, implements the steps of the method according to the first aspect, or implements the steps of the method according to the second aspect, or implements the steps of the method according to the third aspect.

According to a thirteenth aspect, a chip is provided, where the chip includes a processor and a communication interface, the communication interface is coupled to the processor, and the processor is configured to run a program or an instruction to implement the steps of the method according to the first aspect, or implement the steps of the method according to the second aspect, or implement the steps of the method according to the third aspect.

According to a fourteenth aspect, a computer program product/a program product is provided, where the computer program product/the program product is stored in a storage medium, and the computer program product/the program product is executed by at least one processor to implement the steps of the method according to the first aspect, or implement the steps of the method according to the second aspect, or implement the steps of the method according to the third aspect.

In the embodiments of this application, a BSC communication capability supported by a first device is flexibly configured through target configuration information, to assist a BSC network in effectively managing a large quantity of BSC devices (or Internet of Things devices), thereby effectively improving the overall transmission efficiency of the BSC network.

### BRIEF DESCRIPTION OF THE DRAWINGS

FIG. 1 is a schematic structural diagram of a wireless communication system according to an exemplary embodiment of this application.
FIG. 2 is a schematic flowchart of a backscatter communication method according to an exemplary embodiment of this application.
FIG. 3a is a schematic structural diagram of a backscatter communication network according to an exemplary embodiment of this application.
FIG. 3b is a schematic structural diagram of a backscatter communication network according to another exemplary embodiment of this application.
FIG. 4 is a schematic flowchart of a backscatter communication method according to another exemplary embodiment of this application.
FIG. 5a is a schematic structural diagram of a backscatter communication network according to still another exemplary embodiment of this application.
FIG. 5b is a schematic structural diagram of a backscatter communication network according to still another exemplary embodiment of this application.
FIG. 5c is a schematic structural diagram of a backscatter communication network according to still another exemplary embodiment of this application.
FIG. 5d is a schematic structural diagram of a backscatter communication network according to still another exemplary embodiment of this application.
FIG. 5e is a schematic structural diagram of a backscatter communication network according to still another exemplary embodiment of this application.
FIG. 5f is a schematic structural diagram of a backscatter communication network according to still another exemplary embodiment of this application.
FIG. 6 is a schematic flowchart of a backscatter communication method according to another exemplary embodiment of this application.
FIG. 7 is a schematic flowchart of a backscatter communication method according to another exemplary embodiment of this application.
FIG. 8 is a schematic structural diagram of a backscatter communication apparatus according to an exemplary embodiment of this application.
FIG. 9 is a schematic structural diagram of a backscatter communication apparatus according to another exemplary embodiment of this application.
FIG. 10 is a schematic structural diagram of a backscatter communication apparatus according to still another exemplary embodiment of this application.
FIG. 11 is a schematic structural diagram of a device according to an exemplary embodiment of this application.
FIG. 12 is a schematic structural diagram of a terminal according to an exemplary embodiment of this application.
FIG. 13 is a schematic structural diagram of a network side device according to an exemplary embodiment of this application.

### DETAILED DESCRIPTION

The technical solutions in the embodiments of this application are clearly described below with reference to the accompanying drawings in the embodiments of this application. Apparently, the described embodiments are some rather than all of the embodiments of this application. All other embodiments obtained by a person of ordinary skill in the art based on the embodiments of this application fall within the protection scope of this application.

The terms "first", "second", and the like in this specification and claims of this application are intended to distinguish between similar objects but are not intended to describe a specific order or sequence. It should be understood that the terms used in such a way are interchangeable in proper circumstances, so that the embodiments of this application can be implemented in other sequences than the sequence illustrated or described herein. In addition, the objects distinguished by "first" and "second" are usually of one type, and there is no limitation on quantities of the objects. For example, there may be one or more first objects. In addition, "and/or" in this specification and the claims indicate at least one of the connected objects, and the character "/" usually indicates an "or" relationship between the associated obj ects.

It should be noted that, the technologies described in the embodiments of this application are not limited to a Long Term Evolution (Long Term Evolution, LTE)/LTE-Advanced (LTE-Advanced, LTE-A) system, and can be further used in other wireless communication systems, such as Code Division Multiple Address (Code Division Multiple Access, CDMA), Time Division Multiple Access (Time Division Multiple Access, TDMA), Frequency Division Multiple Access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the described technologies can be used not only for the above-mentioned systems and radio technologies, but also for other systems and radio technologies. The following descriptions describe a New Radio (New Radio, NR) system for exemplary purposes, and NR terms are used in most of the following descriptions, but these technologies are also applicable to applications other than the NR system application, such as a 6th generation (6th Generation, 6G) communication system.

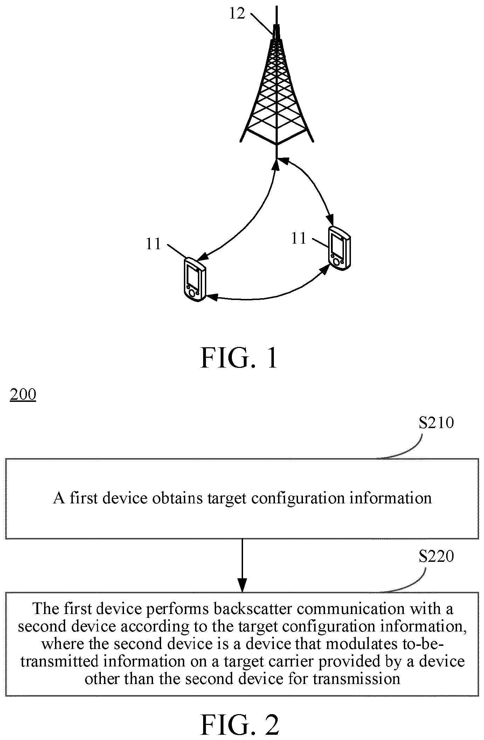

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, a self-service machine, and other terminal-side devices. The wearable device includes a smartwatch, a smart band, a smart headphone, smart glasses, smart jewelry (a smart bracelet, a smart wrist-band, a smart ring, a smart necklace, a smart anklet, a smart ankle chain, and the like), a smart wrist strap, smart clothes, and the like. It should be noted that a specific type of the terminal 11 is not limited in this embodiment of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a Wireless Fidelity (Wireless Fidelity, WiFi) node, or the like. The base station may be referred to as a Node B, an evolved Node B (evolved Node B, eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting/receiving point (Transmitting Receiving Point, TRP), or some other suitable term in the art. As long as the same technical effect is achieved, the base station is not limited to a specific technical term. It should be noted that, in this embodiment of this application, only a base station in an NR system is used as an example for description, and a specific type of the base station is not limited.

The technical solutions provided in the embodiments of this application are described in detail below through some embodiments and application scenarios thereof with reference to the accompanying drawings.

FIG. 2 is a schematic flowchart of a backscatter communication method 200 according to an exemplary embodiment of this application. The method 200 may be performed by, but not limited to, a first device, such as a terminal or a network side device, and may be specifically performed by hardware and/or software installed in the first device. In this embodiment, the method 200 may include at least the following steps.

S210: The first device obtains target configuration information.

The target configuration information includes backscatter communication (Backscatter Communication, BSC)-related configuration information, to configure the first device to have a corresponding BSC communication function, to better control the first device (which may also be referred to as legacy user equipment (Legacy User Equipment, Legacy UE)) and a BSC device (such as a second device mentioned subsequently) to perform data transmission or signaling transmission, to improve overall transmission efficiency of a network. It should be noted that the BSC device (that is, the second device) may be a device that modulates to-be-transmitted information on a target carrier provided by a device other than the second device for transmission, or the like. The first device is legacy UE supporting a Third Generation Partnership Project (Third Generation Partnership Project, 3GPP) protocol stack, and may have a carrier generator, a power amplifier, a frequency oscillator, or the like. This is not limited herein.

It may be understood that the backscatter communication means that the BSC device may transmit data of the BSC device by performing signal modulation by using a communication device (such as the first device) other than the BSC device or a radio frequency signal (such as a carrier signal or an excitation signal) in the environment. Based on this, in this embodiment, the backscatter communication-related configuration information may include at least one of the following (11) to (13).

(11) First configuration information. The first configuration information is used for configuring relevant parameters of a radio frequency signal. The radio frequency signal is used for supplying power to at least one second device, and/or the radio frequency signal is used for providing a target carrier to at least one second device. It may be understood that in an implementation, the target carrier may be used both as a carrier signal for signal modulation by the second device and as an RF signal for energy harvesting.

If the radio frequency signal is used for supplying power to the at least one second device, the relevant parameters of the radio frequency signal may include, but are not limited to, at least one of (111) to (115).

(111) Power supply switch indication information, used for indicating whether the first device supports or enables a function of supplying power to at least one second device. In an implementation, the power supply switch indication information may be a bit "1" or "0". For example, the bit "1" may indicate that the first device supports or enables the power supply function, and the bit "0" indicates that the first device turns off or does not support the power supply function.

(112) Power supply waveform indication information, used for indicating a signal waveform of an RF signal for energy harvesting transmitted by the first device. For example, it is assumed that the first device supports signal waveforms of four RF signals for energy harvesting: a cyclic prefix-orthogonal frequency division multiplexing (Cyclic prefix Orthogonal frequency division multiplex, CP-OFDM) waveform, a discrete Fourier transform- spread orthogonal frequency division multiplexing (Discrete Fourier Transform Spread Orthogonal frequency division multiplex, DFT-S-OFDM) waveform, a sine wave, and a chaotic signal. In this case, the waveform of the RF signal for energy harvesting transmitted by the first device may be indicated by the power supply waveform indication information. For example, a symbol "00" is used to indicate the CP-OFDM waveform, "01" indicates the DFT-S-OFDM waveform, "10" indicates the sine wave, and " 11 indicates the chaotic signal.

Certainly, an indication relationship between the power supply waveform indication information and the signal waveform of the RF signal for energy harvesting may be implemented by protocol agreement, high-level configuration, or the like. This is not limited herein.

(113) Start time information of the RF signal for energy harvesting, end time information of the RF signal for energy harvesting, time-domain pattern (pattern) information of the RF signal for energy harvesting, frequency domain resource information of the RF signal for energy harvesting, and the like.

(114) Power magnitude information of the RF signal for energy harvesting.

(115) Beam (beam) direction information of the RF signal for energy harvesting.

In addition, if the radio frequency signal is used for providing a target carrier to the at least one second device, the relevant parameters of the radio frequency signal may include, but are not limited to, at least one of (116) to (119).

(116) Carrier switch indication information, used for indicating whether the first device supports or enables a function of providing a target carrier to at least one second device. Based on this, in an implementation, the carrier switch indication information may be a bit "1" or "0". For example, the bit "1" may indicate that the first device supports or enables the function of providing the target carrier, and the bit "0" indicates that the first device turns off or does not support the function of providing the target carrier.

(117) Carrier signal waveform indication information, used for indicating a waveform of a signal used for providing a target carrier and transmitted by the first device. For example, it is assumed that the first device supports signal waveforms of four carrier signals: a CP-OFDM waveform, a DFT-S-OFDM waveform, a sine wave, and a chaotic signal. In this case, the waveform of the carrier signal transmitted by the first device may be indicated by the carrier signal waveform indication information. For example, "00" indicates the CP-OFDM waveform, "01" indicates the DFT-S-OFDM waveform, "10" indicates the sine wave, and "11" indicates the chaotic signal.

(118) Start time information of the carrier signal, end time information of the RF (Radio Frequency, RF) signal for energy harvesting, time-domain pattern information of the RF signal for energy harvesting, frequency domain resource information of the RF signal for energy harvesting, and the like.

(119) Power magnitude information of the carrier signal and beam direction information of the carrier signal.

(12) Second configuration information. The second configuration information is used for configuring relevant parameters of a BSC control command.

In this embodiment, the relevant parameters of the BSC control command include at least one of the following (121) to (124).

(121) BSC control command enable switch indication information, used for indicating whether the first device transmits a BSC control command to at least one second device. Based on this, in a possible implementation, a bit "1" may be used to indicate that the first device supports or enables a BSC control command function. "0" indicates that the first device turns off or does not support a control command function.

(122) Synchronization information, namely, synchronization information in the BSC control command, used for information synchronization by the second device. In this embodiment, the synchronization information may include information such as a sequence type of the synchronization information or a length of the synchronization information.

(123) A state control command, namely, information used for controlling a state of the second device. For example, the state control command may be a save command, a query command, a data scheduling command, or an inactivation command.

(124) A bearer mode of the BSC control command, namely, a bearer mode when the first device transmits control information to the at least one second device. The control information may be radio resource control (Radio Resource Control, RRC), a Medium Access Control control element (Medium Access Control Control Element, MAC-CE), sidelink control information (Sidelink Control Information, SCI), or a preamble sequence.

(13) Third configuration information. The third configuration information is used for configuring relevant parameters for BSC signal transmission.

Optionally, the relevant parameters for BSC signal transmission include at least one of the following (131) to (133).

(131) BSC signal reception and transmission switch indication information, used for indicating whether the first device transmits data to at least one second device or whether the first device receives data transmitted by at least one second device.

(132) Forward link transmission parameter or scheduling information, namely, a data transmission link from the first device to the second device. Signal transmission parameter or scheduling information on the data transmission link may include, but is not limited to, channel coding, modulation, resource information, hybrid automatic repeat request (Hybrid Automatic Repeat Request, HARQ)-related information, multi-antenna-related information, power control-related information, and the like.

(133) Reverse link transmission parameter or scheduling information, namely, a data transmission link from the second device to the first device. Signal transmission parameter or scheduling information on the data transmission link may include, but is not limited to: channel coding, modulation, resource information, HARQ-related information, multi-antenna-related information, power control-related information, and the like.

It should be noted that when the first device transmits the RF signal for energy harvesting, the target carrier, and the BSC control command mentioned above to the second device, the first device may add such signals to the same signal for transmission, or may add such signals individually to different signals for transmission. This is not limited in this embodiment.

Optionally, through configuration of the foregoing target configuration information, the first device may serve as at least one of the following in the backscatter communication process.

BSC power supply device: Under control of a network (for example, an access network device or a core network device), the first device may transmit a radio frequency signal to at least one second device in a preconfigured signal waveform at an appropriate time to supply power to, for example, charge, the at least one second device.

BSC control device: That is, the first device is a device that can transmit control information and synchronization information to at least one second device, to indicate the synchronization information of the at least one second device, the BSC signal transmission parameter, and the like.

BSC data reception and transmission device: That is, the first device is a device that can receive a backscatter signal of the BSC device or a device that transmits data to the BSC device.

A device that provides a target carrier (or an excitation signal) to the BSC device: At least one second device may modulate information of the second device on the target carrier for transmission.

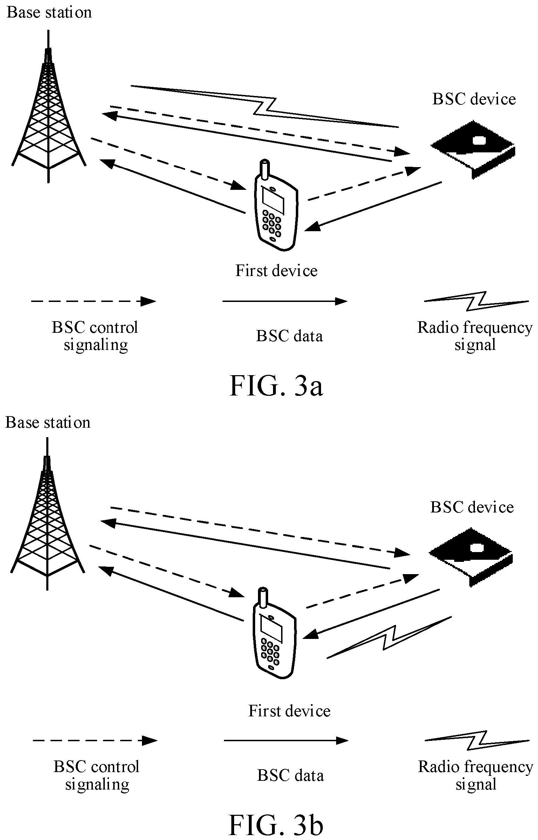

Certainly, as shown in FIG. 3a and FIG. 3b, in actual deployment, the BSC power supply device, the BSC control device, the device that provides a target carrier to the BSC device, and the data reception and transmission device may be the same device or different devices, so that different BSC network deployments can be flexibly adapted.

For example, in FIG. 3a, a base station serves as a BSC power supply device, a BSC control device, and a data reception and transmission device at the same time, and the first device serves as a data reception and transmission device. For another example, in FIG. 3b, the first device serves as both a BSC power supply device and a data reception and transmission device, and a base station serves as both a BSC control device and a data reception and transmission device.

It should be noted that, in a BSC network deployment, if the first device serves as one or more of a BSC power supply device, a carrier device, a BSC control device, or a BSC data reception and transmission device in a BSC network, the BSC network may be referred to as a legacy UE auxiliary/assisting BSC network.

S220: The first device performs the backscatter communication with a second device according to the target configuration information.

In this embodiment, a BSC communication capability supported by the first device is flexibly configured through the target configuration information, to assist the BSC network in better managing power supply, control information, data forwarding, and the like of the BSC device, thereby effectively improving overall transmission efficiency of the BSC network, and further achieving flexible BSC network deployment.

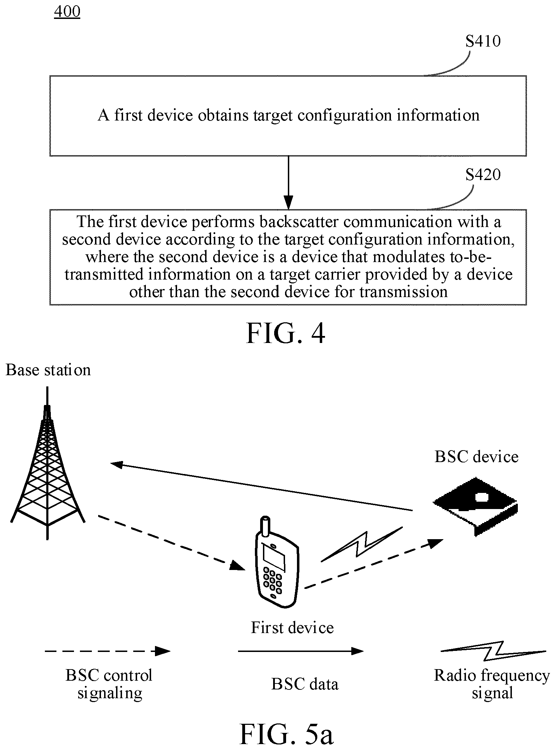

FIG. 4 is a schematic flowchart of a backscatter communication method 400 according to an exemplary embodiment of this application. The method 400 may be performed by, but not limited to, a first device, such as a terminal or a network side device, and may be specifically performed by hardware and/or software installed in the first device. In this embodiment, the method 400 may include at least the following steps.

S410: The first device obtains target configuration information.

The target configuration information includes BSC-related configuration information.

It may be understood that, for an implementation process of S410, in addition to referring to the descriptions in the method embodiment 200, in a possible implementation, there may be a plurality of manners for the first device to obtain the target configuration information. The following describes the process of obtaining the target configuration information with reference to manner 1 and manner 2, and the content is as follows:

Manner 1: The first device obtains the target configuration information through first signaling in a case that the first device is in an RRC connected mode or an RRC active mode. In other words, a network side device (for example, a base station) may transmit the target configuration information to the first device in a manner of first signaling. In this case, the first device receives the first signaling transmitted by the network side device, where the first signaling carries the target configuration information.

In this embodiment, the first signaling may include any one of the following (21) to (24).

(21) First RRC signaling. The first RRC signaling may be newly introduced dedicated RRC signaling, to notify the first device of the target configuration information and activate the target configuration information. Certainly, when the first device receives the company first RRC signaling, the first device does not need to receive downlink control information (Downlink Control Information, DCI) scheduling information on a physical downlink control channel (Physical downlink control channel, PDCCH).

(22) Second RRC signaling and first DCI. The second RRC signaling is semi-static signaling, and the first DCI is used for activating or deactivating target configuration information corresponding to the second RRC signaling. In other words, the network side device (for example, the base station) may first configure the target configuration information through the second RRC signaling, and then activate or deactivate the second RRC configuration through the first DCI.

(23) Second DCI. The second DCI is scheduling signaling on a PDCCH and is used for dynamically scheduling the BSC-related configuration information of the first device. The second DCI may be a newly introduced or defined DCI format (format) and is used for BSC communication scheduling of the first device.

(24) First MAC CE signaling. That is, the network side device (for example, the base station) indicates the target configuration information to the first device through a first MAC CE. For example, a BSC command (Command) MAC CE may be defined.

Manner 2: The first device autonomously determines the target configuration information according to preconfigured BSC-related configuration information in a case that the first device has no network connection or is without network coverage.

The preconfigured BSC-related configuration information may be preconfigured by the network side device to the first device through RRC signaling or the like when the first device is in an RRC connected mode or an RRC active mode, so that the first device autonomously determines the target configuration information according to the preconfigured BSC-related configuration information in a case that there is no network connection or no network coverage.

Alternatively, the preconfigured BSC-related configuration information may be preconfigured in the first device in a factory default manner, so that the first device autonomously determines the target configuration information according to the preconfigured BSC-related configuration information in a case that there is no network connection or no network coverage.

Certainly, the configuration manner of the preconfigured BSC-related configuration information may be, but is not limited to, the foregoing two manners.

It should be noted that, for the foregoing manner 1 and manner 2, if the target configuration information is configured by the network side device through signaling (such as the first signaling in the foregoing manner or the RRC signaling in manner 2), the first device may further report UE capability information (UE Capability Information) to the network side device, for the network side device to determine the target configuration information or the preconfigured BSC-related configuration information according to the UE capability information. The UE capability information is capability information of BSC-related communication supported by the first device.

In this embodiment, the UE capability information may be capability information currently possessed by the first device, or capability information preferred by the first device. This is not limited herein.

Based on this, in an implementation, the UE capability information may include at least one of the following (31) to (33).

(31) The first device provides a relevant capability of a radio frequency signal to at least one second device. The radio frequency signal is used for supplying power to and/or providing a target carrier to the at least one second device.

Optionally, in a case that the radio frequency signal is used for supplying power to the at least one second device, the relevant capability for the radio frequency signal includes at least one of a battery level of the first device, a waveform of an RF signal for energy harvesting, a length of an RF signal for energy harvesting, frequency information of an RF signal for energy harvesting, or power information of an RF signal for energy harvesting.

In a case that the radio frequency signal is used for providing a target carrier to the at least one second device, the relevant capability for the radio frequency signal includes at least one of a carrier signal waveform, a carrier signal length, carrier frequency information, or carrier power information that can be supported by the first device.

(32) A capability of the first device for transmitting a BSC control command. Optionally, the capability of the first device for transmitting a BSC control command includes at least one of a preamble synchronization sequence or the ability of control signaling with group scheduling that can be provided by the first device.

(33) A wireless capability supported by the first device for BSC signal reception and transmission. Optionally, the wireless capability supported by the first device for BSC signal reception and transmission includes at least one of a synchronization capability, a channel coding-decoding capability, a signal modulation-demodulation capability, an antenna capability, a precoding capability, or a bandwidth part (Bandwidth Part, BWP) capability that is supported by the first device.

Certainly, the manner in which the first device reports the UE capability information to the network side device may include the following manner 1 or manner 2.

Manner 1: The first device reports the UE capability information to the network side device in a case that the first device receives a UE capability enquiry (UE Capability Enquiry) instruction transmitted by the network side device. The UE capability enquiry instruction carries at least a BSC communication-related UE capability.

Manner 2: In a case that the first device does not receive a UE capability enquiry instruction transmitted by the network side device, the first device may report the UE capability information to the network side device through UE assistance information (UE Assistance Information, UAI), that is, the UAI carries the UE capability information.

It should be noted that regardless of the UE capability information reporting manner mentioned in the foregoing manner 1 or manner 2, if the foregoing network side device is an access network device (such as a base station), the base station may further report the received UE capability information to a core network device or an application server through UE capability information indication (UE Capability Information Indication), to inform the core network device or the application server of a BSC communication-related capability supported or preferred by the first device, so that the core network device or the application server performs a corresponding operation according to the BSC communication-related capability supported or preferred by the first device.

S420: The first device performs the backscatter communication with a second device according to the target configuration information.

The second device is a device that modulates to-be-transmitted information on a target carrier provided by a device other than the second device for transmission.

It may be understood that, for an implementation process of S420, reference may be made to the descriptions in the method embodiment 200, and additionally, in a possible implementation, the performing, by the first device, the backscatter communication with a second device according to the target configuration information includes: transmitting, by the first device, BSC-related configuration information or BSC-related control information to the at least one second device through second signaling in a case that the target configuration information includes the second configuration information and that BSC control command enable switch indication information included in the second configuration information indicates ON.

Optionally, the second signaling includes at least one of third RRC signaling, a second MAC CE, first SCI, or a first preamble sequence.

In addition, in a case that the target configuration information includes the second configuration information and that BSC control command enable switch indication information included in the second configuration information indicates OFF, the network device transmits BSC-related configuration information or BSC-related control information, such as a target carrier, a synchronization signal, BSC group identification information, or a data transmission parameter for backscatter transmission, to the at least one second device through third signaling.

Optionally, the third signaling includes at least one of fourth RRC, a third MAC CE, third DCI, or a second preamble sequence.

Based on the foregoing descriptions of the method embodiments 200 to 400, for ease of understanding, the following further exemplarily describes, with reference to example 1 and example 2, the backscatter communication process provided above. The content is as follows:

### Example 1

Because the first device aids/assists the BSC device in communication, a BSC power supply device, a BSC control device, a BSC data reception and transmission device, or the like may be flexibly configured in a network. In this case, a plurality of different BSC network deployments may be used (except that the BSC energy supply device, the BSC control device and the BSC data transceiver device are all part of the same base station). The BSC power supply device may be the base station or the first device. The BSC control device may be the base station or the first device. Data transmitted by the BSC device may be directly transmitted to the base station, or may be first transmitted to the first device and then transmitted to the base station. In this example 1, a backscatter communication process is described by using an example in which both the BSC control device and the BSC power supply device are the first device, and the BSC data reception and transmission device is the base station.

As shown in FIG. 5a, the BSC communication scenario shown in FIG. 5a is a BSC network deployed for a problem of weak downlink coverage due to the impact of receiving sensitivity on the BSC device (that is, the foregoing second device). Specifically, for downlink transmission, the first device performs BSC power supply to the BSC device and transmits BSC control signaling. For uplink transmission, although transmit power of the BSC device is weak, because receiving sensitivity of the base station is high, the BSC device may directly transmit data to the base station.

In this example 1, the communication process between the first device and the BSC device may include, but is not limited to, the following content shown in (41) to (43).

(41) The first device reports UE capability information thereof to the network side device.

(42) The network side device determines target configuration information according to the UE capability information, and transmits the target configuration information to the first device.

(43) The first device performs BSC communication with the BSC device according to the target configuration information. For example, the first device delivers BSC-related configuration information or BSC-related control information to the BSC device.

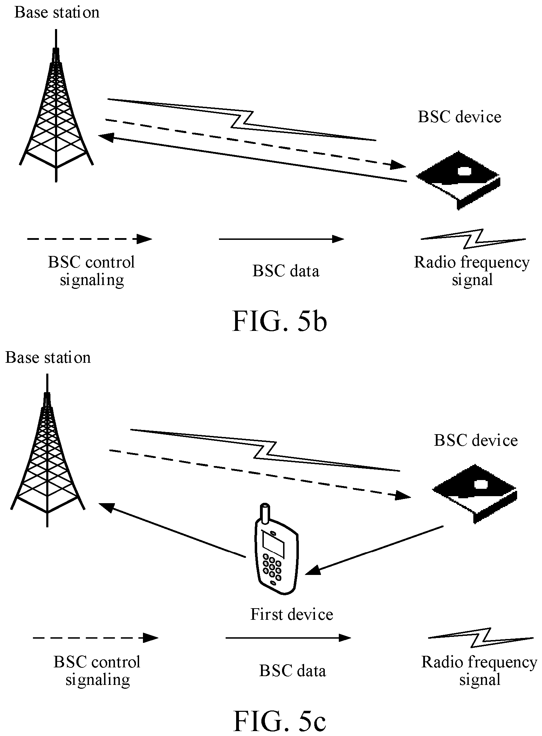

It may be understood that, for the implementation process in the foregoing (41) to (43), reference may be made to the related descriptions in the foregoing method embodiments 200 to 400. To avoid repetition, details are not described herein again. In addition, the solution in this example 1 may also be extended to other BSC communication scenarios, for example, the BSC networks shown in FIG. 5b to FIG. 5e.

As shown in FIG. 5b, in this BSC network, the base station serves as a BSC power supply device, a BSC control device, and a BSC data reception and transmission device. That is, in this case, the base station directly communicates with the BSC device. This BSC network has a high requirement on receiving sensitivity of the base station and the BSC device, but a simple architecture deployment.

As shown in FIG. 5c, in this BSC network, the first device serves as a BSC power supply device and a BSC control device, and the base station directly transmits downlink data to the BSC device. In uplink transmission, the BSC device first backscatters data to the first device, and then the first device forwards the data to the base station.

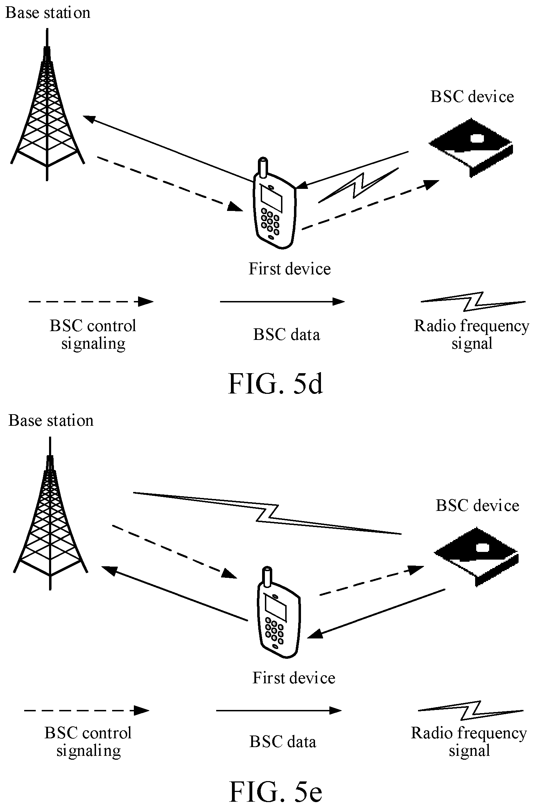

As shown in FIG. 5d, in this BSC network, the first device serves as a BSC power supply device, a BSC control device, and a BSC data transceiver device. Downlink data is first delivered by the base station to the first device, and then forwarded by the first device to the BSC device. In uplink transmission, the BSC device first backscatters data to the first device, and then the first device forwards the data to the base station.

As shown in FIG. 5e, in this BSC network, the base station serves as a BSC power supply device and a BSC control device. Downlink data is first delivered by the base station to the first device, and then forwarded by the first device to the BSC device. In uplink transmission, the BSC device first backscatters data to the first device, and then the first device forwards the data to the base station.

This example 1 shows a downlink weak coverage scenario in which the receiving sensitivity of the BSC device is poor. The network side device configures a power supply function, a control function, and corresponding configuration parameters for UE. This more effectively improves robustness of receiving a downlink control command by the BSC device and improves radio frequency energy conversion efficiency.

### Example 2

In the BSC communication scenarios mentioned in example 1, the base station exists as at least one of a BSC power supply device, a BSC control device, or a BSC data reception and transmission device in the BSC network. However, in some deployments, such as a factory, a tunnel, or other scenarios without network coverage or connection, the network is still intended to manage the BSC device. In this case, the BSC device may be managed through a standalone (standalone) architecture of the first device, and a process thereof is similar to mode 2 in wireless communication of a vehicle (Vehicle-to-Everything, V2X).

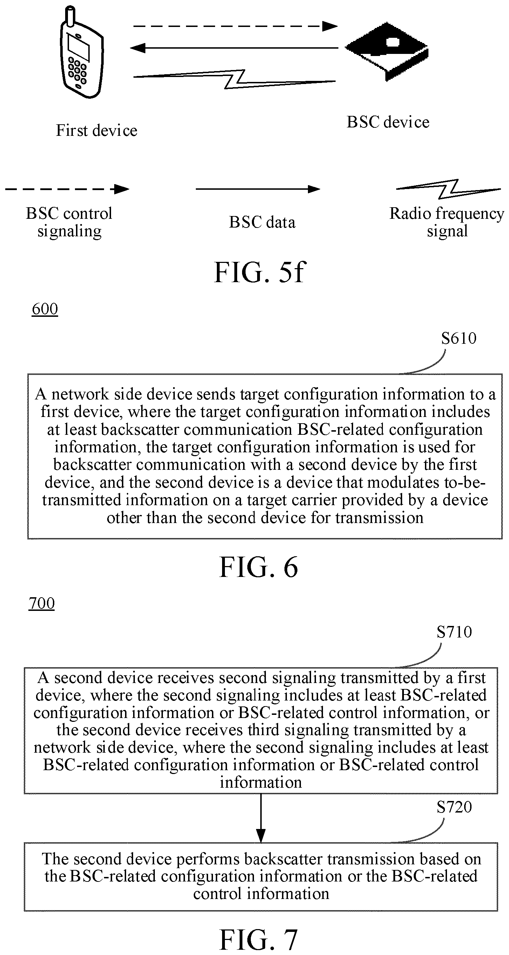

For example, FIG. 5f shows a BSC network in which a first device serves as an anchor node to autonomously supply power to a BSC device, transmit a BSC control command, and perform BSC data reception and transmission without network coverage. In this scenario, the first device may be configured in the following manner.

(51) The first device is notified in a preconfigured manner, and the first device autonomously determines the target configuration information according to the preconfigured BSC-related configuration information.

(52) The first device performs BSC communication with the BSC device according to the target configuration information. For example, the first device delivers the BSC-related configuration information or BSC-related control information to the BSC device.

(53) After receiving target data transmitted by the BSC device through backscattering, the first device may implement the following steps:
(I) Store the target data in the first device as local data all the time, so that the first device performs application layer processing, and the like.
(II) The target data temporarily stored in the first device can be reported to the base station by the first device once it is connected to the network, and then reported to the core network equipment or application server by the base station.
(III) The target data temporarily stored in the first device can be directly reported to the core network or application server by the first device through Non-Access Stratum (NAS) signaling once the first device is connected to the network.

It may be understood that, for the implementation process in the foregoing (51) to (53), reference may be made to the related descriptions in the foregoing method embodiments 200 to 400. To avoid repetition, details are not described herein again.

This example 2 shows a standalone BSC network deployment architecture without participation by a base station, which is suitable for a home scenario, a weak coverage scenario, or a personal area network. After the first device is preconfigured, scheduling of the BSC device can be implemented.

FIG. 6 is a schematic flowchart of a backscatter communication method 600 according to an exemplary embodiment of this application. The method 600 may be performed by, but not limited to, a network side device, and may be specifically performed by hardware and/or software installed in the network side device. In this embodiment, the method 600 may include at least the following steps.

S610: A network side device transmits target configuration information to a first device.

The target configuration information includes backscatter communication BSC-related configuration information. The target configuration information is used for the backscatter communication with a second device by the first device. The second device is a device that modulates to-be-transmitted information on a target carrier provided by a device other than the second device for transmission.

Optionally, the transmitting, by a network side device, target configuration information to a first device includes: transmitting, by the network side device, first signaling to the first device, wherein the first signaling includes at least the target configuration information. The first signaling includes at least one of the following: first RRC signaling; second RRC signaling and first DCI, where the second RRC signaling is semi-static signaling, and the first DCI is used for activating or deactivating target configuration information corresponding to the second RRC signaling; second downlink control information DCI, where the second DCI is scheduling signaling on a physical downlink control channel PDCCH and is used for dynamically scheduling the BSC-related configuration information of the first device; or first Medium Access Control control element MAC CE signaling.

Optionally, the backscatter communication BSC-related configuration information includes at least one of the following: first configuration information, where the first configuration information is used for configuring relevant parameters of a radio frequency signal, and the radio frequency signal is used for supplying power to at least one second device, and/or the radio frequency signal is used for providing a target carrier to at least one second device; second configuration information, where the second configuration information is used for configuring relevant parameters of a BSC control command; or third configuration information, where the third configuration information is used for configuring relevant parameters for BSC signal transmission.

Optionally, the method further includes: transmitting, by the network device, the BSC-related configuration information or BSC-related control information to the at least one second device through third signaling in a case that the target configuration information includes the second configuration information and that BSC control command enable switch indication information included in the second configuration information indicates OFF.

Optionally, the third signaling includes at least one of the following: fourth RRC; a third MAC CE; third DCI; or a second preamble sequence.

Optionally, the method further includes: receiving, by the network side device, UE capability information transmitted by the first device, where the UE capability information is information about a BSC-related capability supported by the first device; and determining, by the network side device, the target configuration information according to the UE capability information.

Optionally, the receiving UE capability information transmitted by the first device includes any one of the following: transmitting, by the network side device, a UE capability enquiry instruction to the first device, and receiving the UE capability information transmitted by the first device; or receiving, by the network side device, the UE capability information transmitted by the first device through UE assistance information UAI.

Optionally, the method further includes: in a case that the network side device is an access network device, transmitting, by the access network device, the UE capability information to a core network device through UE capability indication information.

Optionally, the UE capability information includes at least one of the following: a relevant capability of the first device for providing a radio frequency signal to at least one second device, where the radio frequency signal is used for supplying power to and/or providing a target carrier to the at least one second device; a capability of the first device for transmitting a BSC control command; or a wireless capability supported by the first device for BSC signal reception and transmission.

Optionally, in a case that the radio frequency signal is used for supplying power to the at least one second device, the relevant capability for the radio frequency signal includes at least one of a battery level of the first device, a waveform of an RF signal for energy harvesting, a length of an RF signal for energy harvesting, frequency information of an RF signal for energy harvesting, or power information of an RF signal for energy harvesting; or in a case that the radio frequency signal is used for providing a target carrier to the at least one second device, the relevant capability for the radio frequency signal includes at least one of a carrier signal waveform, a carrier signal length, carrier frequency information, or carrier power information that can be supported by the first device.

Optionally, the capability of the first device for transmitting a BSC control command includes at least one of a preamble synchronization sequence or the ability of control signaling with group scheduling that can be provided by the first device.

Optionally, the wireless capability supported by the first device for BSC signal reception and transmission includes at least one of a synchronization capability, a channel coding-decoding capability, a signal modulation-demodulation capability, an antenna capability, a precoding capability, or a bandwidth part BWP capability that is supported by the first device.

It may be understood that, because the implementations mentioned in the method embodiment 600 have the same or corresponding technical features as the foregoing method embodiments 200 to 300, for implementation processes of the implementations mentioned in the method embodiment 600, reference may be made to the related descriptions in the method embodiments 200 to 300, and the same or corresponding technical effects are achieved. To avoid repetition, details are not described herein again.

FIG. 7 is a schematic flowchart of a backscatter communication method 700 according to an exemplary embodiment of this application. The method 700 may be performed by, but not limited to, a second device, such as a terminal or a network side device, and may be specifically performed by hardware and/or software installed in the second device. In this embodiment, the method 700 may include at least any one of the following steps.

S710: A second device receives second signaling transmitted by a first device, where the second signaling includes at least BSC-related configuration information or BSC-related control information, or the second device receives third signaling transmitted by a network side device, where the second signaling includes at least BSC-related configuration information or BSC-related control information, where the second device is a device that modulates to-be-transmitted information on a target carrier provided by a device other than the second device for transmission.

S720: The second device performs backscatter transmission based on the BSC-related configuration information or the BSC-related control information. Optionally, the second signaling includes at least one of the following: third RRC signaling; a second MAC CE; first sidelink control information SCI; or a first preamble sequence.

Optionally, the third signaling includes at least one of the following: fourth RRC; a third MAC CE; third DCI; or a second preamble sequence.

It may be understood that, because the implementations mentioned in the method embodiment 700 have the same or corresponding technical features as the foregoing method embodiments 200 to 300, for implementation processes of the implementations mentioned in the method embodiment 700, reference may be made to the related descriptions in the method embodiments 200 to 400, and the same or corresponding technical effects are achieved. To avoid repetition, details are not described herein again.

The backscatter communication methods 200 to 700 provided in the embodiments of this application may be performed by a backscatter communication apparatus. In the embodiments of this application, the backscatter communication apparatus provided in the embodiments of this application is described by using an example in which the backscatter communication apparatus performs the backscatter communication methods 200 to 700.

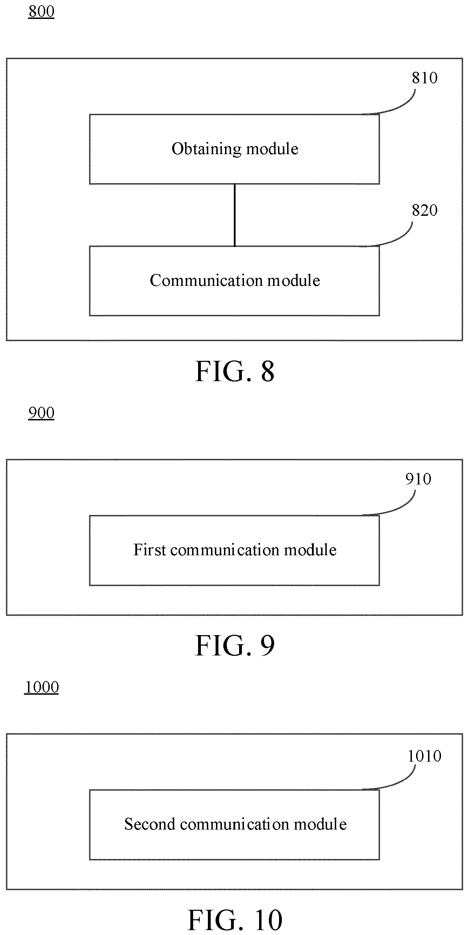

FIG. 8 is a schematic structural diagram of a backscatter communication apparatus according to an exemplary embodiment of this application. The apparatus includes: an obtaining module 810, configured to obtain target configuration information, where the target configuration information includes backscatter communication BSC-related configuration information; and a communication module 820, configured to perform the backscatter communication with a second device according to the target configuration information, where the second device is a device that modulates to-be-transmitted information on a target carrier provided by a device other than the second device for transmission.

Optionally, that the obtaining module 810 obtains the target configuration information includes at least one of the following: obtaining, by the first device, the target configuration information through first signaling in a case that the first device is in a radio resource control RRC connected mode or an RRC active mode; or autonomously determining, by the first device, the target configuration information according to preconfigured BSC-related configuration information in a case that the first device has no network connection or is without network coverage.

Optionally, that the obtaining module 810 obtains the target configuration information through first signaling includes: receiving, by the first device, first signaling transmitted by a network side device, where the first signaling carries the target configuration information, where the first signaling includes any one of the following: first RRC signaling; second RRC signaling and first DCI, where the second RRC signaling is semi-static signaling, and the first DCI is used for activating or deactivating target configuration information corresponding to the second RRC signaling; second downlink control information DCI, where the second DCI is scheduling signaling on a physical downlink control channel PDCCH and is used for dynamically scheduling the BSC-related configuration information of the first device; or first Medium Access Control control element MAC CE signaling.

Optionally, the backscatter communication BSC-related configuration information includes at least one of the following: first configuration information, where the first configuration information is used for configuring relevant parameters of a radio frequency signal, and the radio frequency signal is used for supplying power to at least one second device, and/or the radio frequency signal is used for providing a target carrier to at least one second device; second configuration information, where the second configuration information is used for configuring relevant parameters of a BSC control command; or third configuration information, where the third configuration information is used for configuring relevant parameters for BSC signal transmission.

Optionally, that the communication module 820 performs the backscatter communication with a second device according to the target configuration information includes: transmitting, by the first device, BSC-related configuration information or BSC-related control information to the at least one second device through second signaling in a case that the target configuration information includes the second configuration information and that BSC control command enable switch indication information included in the second configuration information indicates ON.

Optionally, the second signaling includes at least one of the following: third RRC signaling; a second MAC CE; first sidelink control information SCI; or a first preamble sequence.

Optionally, the communication module 820 is further configured to: report UE capability information to the network side device, where the UE capability information is capability information of BSC-related communication supported by the first device.

Optionally, that the communication module 820 reports UE capability information to the network side device includes any one of the following: reporting the UE capability information to the network side device in a case that a UE capability enquiry instruction transmitted by the network side device is received; or reporting the UE capability information to the network side device through UE assistance information UAI.

Optionally, the UE capability information includes at least one of the following: a relevant capability of the first device for providing a radio frequency signal to at least one second device, where the radio frequency signal is used for supplying power to and/or providing a target carrier to the at least one second device; a capability of the first device for transmitting a BSC control command; or a wireless capability supported by the first device for BSC signal reception and transmission.

Optionally, in a case that the radio frequency signal is used for supplying power to the at least one second device, the relevant capability for the radio frequency signal includes at least one of a battery level of the first device, a waveform of an RF signal for energy harvesting, a length of an RF signal for energy harvesting, frequency information of an RF signal for energy harvesting, or power information of an RF signal for energy harvesting.

In a case that the radio frequency signal is used for providing a target carrier to the at least one second device, the relevant capability for the radio frequency signal includes at least one of a carrier signal waveform, a carrier signal length, carrier frequency information, or carrier power information that can be supported by the first device.

Optionally, the capability of the first device for transmitting a BSC control command includes at least one of a preamble synchronization sequence or the ability of control signaling with group scheduling that can be provided by the first device.

Optionally, the wireless capability supported by the first device for BSC signal reception and transmission includes at least one of a synchronization capability, a channel coding-decoding capability, a signal modulation-demodulation capability, an antenna capability, a precoding capability, or a bandwidth part BWP capability that is supported by the first device.

The backscatter communication apparatus 800 in the embodiments of this application may be an electronic device, for example, an electronic device having an operating system, or may be a component in an electronic device, for example, an integrated circuit or a chip. The electronic device may be a terminal or a device other than the terminal. For example, the terminal may include, but is not limited to, the types of the terminal 11 listed above. The another device may be a server, a network attached storage (Network Attached Storage, NAS), or the like. This is not specifically limited in the embodiments of this application.

The backscatter communication apparatus 800 provided in the embodiments of this application can implement the processes implemented in the method embodiments of FIG. 2 to FIG. 4 and achieve the same technical effects. To avoid repetition, details are not described herein again.

FIG. 9 is a schematic structural diagram of a backscatter communication apparatus according to an exemplary embodiment of this application. The apparatus includes a first transmission module 910, configured to transmit target configuration information to a first device. The target configuration information includes backscatter communication BSC-related configuration information. The target configuration information is used for the backscatter communication with a second device by the first device. The second device is a device that modulates to-be-transmitted information on a target carrier provided by a device other than the second device for transmission.

Optionally, the first transmission module 910 is further configured to receive a signal transmitted by the second device through backscattering.

Optionally, that the first transmission module 910 transmits target configuration information to a first device includes: transmitting first signaling to the first device, where the first signaling includes at least the target configuration information. The first signaling includes at least one of the following: first RRC signaling; second RRC signaling and first DCI, where the second RRC signaling is semi-static signaling, and the first DCI is used for activating or deactivating target configuration information corresponding to the second RRC signaling; second downlink control information DCI, where the second DCI is scheduling signaling on a physical downlink control channel PDCCH and is used for dynamically scheduling the BSC-related configuration information of the first device; or first Medium Access Control control element MAC CE signaling.

Optionally, the backscatter communication BSC-related configuration information includes at least one of the following: first configuration information, where the first configuration information is used for configuring relevant parameters of a radio frequency signal, and the radio frequency signal is used for supplying power to at least one second device, and/or the radio frequency signal is used for providing a target carrier to at least one second device; second configuration information, where the second configuration information is used for configuring relevant parameters of a BSC control command; or third configuration information, where the third configuration information is used for configuring relevant parameters for BSC signal transmission.

Optionally, the first transmission module 910 is further configured to: transmit the BSC-related configuration information or BSC-related control information to the at least one second device through third signaling in a case that the target configuration information includes the second configuration information and that BSC control command enable switch indication information included in the second configuration information indicates OFF.

Optionally, the third signaling includes at least one of the following: fourth RRC; a third MAC CE; third DCI; or a second preamble sequence.

Optionally, the first transmission module is further configured to: receive UE capability information transmitted by the first device, where the UE capability information is information about a BSC-related capability supported by the first device; and determine the target configuration information according to the UE capability information.

Optionally, that the first transmission module 910 receives UE capability information transmitted by the first device includes any one of the following: transmitting, by the network side device, a UE capability enquiry instruction to the first device, and receiving the UE capability information transmitted by the first device; or receiving, by the network side device, the UE capability information transmitted by the first device through UE assistance information UAI.

Optionally, the first transmission module 910 is further configured to: in a case that the network side device is an access network device, transmit, by the access network device, the UE capability information to a core network device through UE capability indication information.

Optionally, the UE capability information includes at least one of the following: a relevant capability of the first device for providing a radio frequency signal to at least one second device, where the radio frequency signal is used for supplying power to and/or providing a target carrier to the at least one second device; a capability of the first device for transmitting a BSC control command; or a wireless capability supported by the first device for BSC signal reception and transmission.

Optionally, in a case that the radio frequency signal is used for supplying power to the at least one second device, the relevant capability for the radio frequency signal includes at least one of a battery level of the first device, a waveform of an RF signal for energy harvesting, a length of an RF signal for energy harvesting, frequency information of an RF signal for energy harvesting, or power information of an RF signal for energy harvesting; or in a case that the radio frequency signal is used for providing a target carrier to the at least one second device, the relevant capability for the radio frequency signal includes at least one of a carrier signal waveform, a carrier signal length, carrier frequency information, or carrier power information that can be supported by the first device.

Optionally, the capability of the first device for transmitting a BSC control command includes at least one of a preamble synchronization sequence or the ability of control signaling with group scheduling that can be provided by the first device.

Optionally, the wireless capability supported by the first device for BSC signal reception and transmission includes at least one of a synchronization capability, a channel coding-decoding capability, a signal modulation-demodulation capability, an antenna capability, a precoding capability, or a bandwidth part BWP capability that is supported by the first device.

The backscatter communication apparatus 900 in the embodiments of this application may be a network side device, or may be a component in the network side device, for example, an integrated circuit or a chip. For example, the network side device may include, but is not limited to, the types of the network side device 12 listed above.

The backscatter communication apparatus 900 provided in the embodiments of this application can implement the processes implemented in the method embodiment of FIG. 6 and achieve the same technical effects. To avoid repetition, details are not described herein again.

FIG. 10 is a schematic structural diagram of a backscatter communication apparatus according to an exemplary embodiment of this application. The apparatus includes a second transmission module 1010. The second transmission module 1010 is configured to receive second signaling transmitted by a first device, where the second signaling includes at least BSC-related configuration information or BSC-related control information; or receive third signaling transmitted by a network side device, where the third signaling includes at least BSC-related configuration information or BSC-related control information. The second transmission module 1010 is further configured to perform backscatter transmission based on the BSC-related configuration information or the BSC-related control information.

Optionally, the second transmission module 1010 is further configured to perform reverse transmission with the first device or the network side device.

Optionally, the second signaling includes at least one of the following: third RRC signaling; a second MAC CE; first sidelink control information SCI; or a first preamble sequence.

Optionally, the third signaling includes at least one of the following: fourth RRC; a third MAC CE; third DCI; or a second preamble sequence.

The backscatter communication apparatus 1000 in the embodiments of this application may be an electronic device, for example, an electronic device having an operating system, or may be a component in an electronic device, for example, an integrated circuit or a chip. The electronic device may be a terminal or a device other than the terminal. For example, the terminal may include, but is not limited to, the types of the terminal 11 listed above. The another device may be a server, a network attached storage (Network Attached Storage, NAS), or the like. This is not specifically limited in the embodiments of this application.

The backscatter communication apparatus 1000 provided in the embodiments of this application can implement the processes implemented in the method embodiment of FIG. 7 and achieve the same technical effects. To avoid repetition, details are not described herein again.

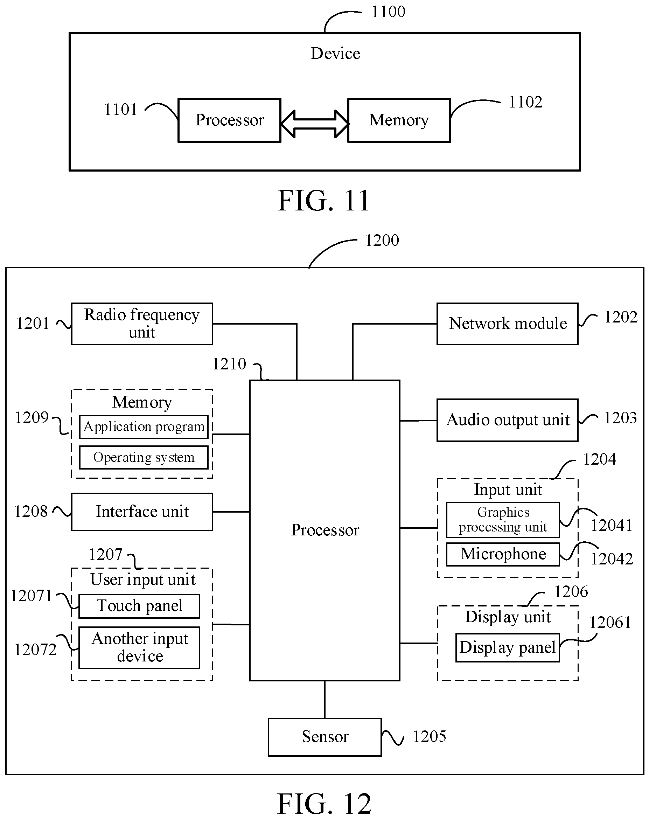

Optionally, as shown in FIG. 11, an embodiment of this application further provides a device 1100, including a processor 1101 and a memory 1102. The memory 1102 stores a program or an instruction runnable on the processor 1101. For example, when the device 1100 is a terminal, the program or the instruction, when executed by the processor 1101, implements the steps of the foregoing backscatter communication method embodiments, and the same technical effects can be achieved. When the communication device 1100 is a network side device, the program or the instruction, when executed by the processor 1101, implements the steps of the foregoing backscatter communication method embodiment, and the same technical effects can be achieved. To avoid repetition, details are not described herein again.

An embodiment of this application further provides a terminal, including a processor and a communication interface. The communication interface is coupled to the processor. The processor is configured to run a program or an instruction to implement the steps of the methods according to the method embodiments 200, 400, and 700. This terminal embodiment corresponds to the foregoing terminal-side method embodiment. Implementation processes and implementations of the foregoing method embodiment may be applied to this terminal embodiment, and the same technical effects can be achieved. Specifically, FIG. 12 is a schematic diagram of a hardware structure of a terminal that implements an embodiment of this application.

The terminal 1200 includes, but is not limited to: at least some components in a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art may understand that, the terminal 1200 may further include a power supply (such as a battery) for supplying power to each component. The power supply may be logically connected to the processor 1210 by using a power management system, thereby implementing functions, such as charging, discharging, and power consumption management, by using the power management system. The structure of the terminal shown in FIG. 12 constitutes no limitation on the terminal. The terminal may include more or fewer components than those shown in the figure, or some components may be combined, or different component arrangements may be used. Details are not described herein again.

It should be understood that in this embodiment of this application, the input unit 1204 may include a graphics processing unit (Graphics Processing Unit, GPU) 1041 and a microphone 12042. The graphics processing unit 12041 processes image data of still pictures or videos captured by an image capture apparatus (such as a camera) in a video capture mode or an image capture mode. The display unit 1206 may include a display panel 12061. The display panel 12061 may be configured in the form of a liquid crystal display, an organic light-emitting diode, or the like. The user input unit 1207 includes at least one of a touch panel 12071 and another input device 12072. The touch panel 12071 is also referred to as a touchscreen. The touch panel 12071 may include two parts: a touch detection apparatus and a touch controller. The another input device 12072 may include, but is not limited to, a physical keyboard, a function button (such as a sound volume control button and a power button), a trackball, a mouse, or a joystick. Details are not described herein.

In this embodiment of this application, after receiving downlink data from the network side device, the radio frequency unit 1201 may transmit the downlink data to the processor 1210 for processing. In addition, the radio frequency unit 1201 may transmit uplink data to the network side device. Usually, the radio frequency unit 1201 includes, but is not limited to, an antenna, an amplifier, a transceiver, a coupler, a low noise amplifier, a duplexer, and the like.

The memory 1209 may be configured to store a software program or instruction and various data. The memory 1209 may mainly include a first storage area storing a program or an instruction and a second storage area storing data. The first storage area may store an operating system, an application program or an instruction required by at least one function (for example, a sound playing function or an image playing function), and the like. In addition, the memory 1209 may include a volatile memory or a non-volatile memory, or the memory 1209 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch Link DRAM, SLDRAM), and a direct rambus random access memory (Direct Rambus RAM, DRRAM). The memory 1209 in the embodiments of this application includes, but is not limited to, these memories and any other suitable types of memories.

The processor 1210 may include one or more processing units. Optionally, the processor 1210 integrates an application processor and a modem processor. The application processor mainly processes operations related to the operating system, a user interface, the application program, and the like. The modem processor mainly processes a wireless communication signal, such as a baseband processor. It may be understood that, the modem processor may alternatively not be integrated in the processor 1210.

The radio frequency unit 1201 obtains target configuration information, where the target configuration information includes backscatter communication BSC-related configuration information; and performs the backscatter communication with a second device according to the target configuration information.

In this embodiment, a BSC communication capability supported by the first device is flexibly configured through the target configuration information, to assist a BSC network in better managing power supply, control information, data forwarding, and the like of a BSC device, thereby effectively improving overall transmission efficiency of the BSC network, and further achieving flexible BSC network deployment.

An embodiment of this application further provides a network side device, including a processor and a communication interface. The communication interface is coupled to the processor. The processor is configured to run a program or an instruction to implement the steps of the method according to the embodiment 600. The network side device embodiment corresponds to the foregoing network side device method embodiment. Implementation processes and implementations of the foregoing method embodiment may be applied to the network side device embodiment, and the same technical effects can be achieved.

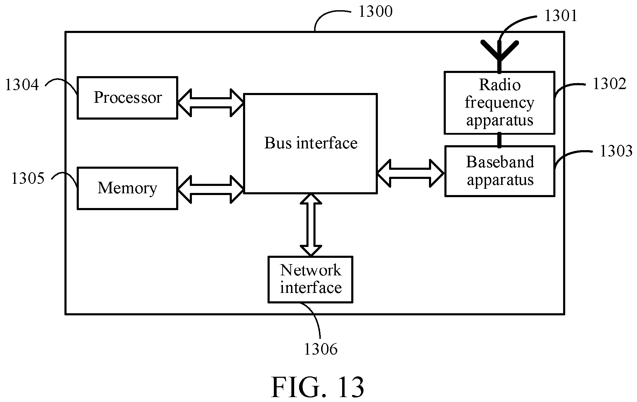

Specifically, an embodiment of this application further provides a network side device. As shown in FIG. 13, the network side device 1300 includes: an antenna 1301, a radio frequency apparatus 1302, a baseband apparatus 1303, a processor 1304, and a memory 1305. The antenna 1301 is connected to the radio frequency apparatus 1302. In an uplink direction, the radio frequency apparatus 1302 receives information through the antenna 1301, and transmits the received information to the baseband apparatus 1303 for processing. In a downlink direction, the baseband apparatus 1303 processes to-be-transmitted information, and transmits the processed information to the radio frequency apparatus 1302. The radio frequency apparatus 1302 processes the received information, and then transmits out the processed information through the antenna 1301.

The method performed by the network side device in the foregoing embodiment may be implemented in the baseband apparatus 1303. The baseband apparatus 1303 includes a baseband processor.

The baseband apparatus 1303 may include, for example, at least one baseband board. A plurality of chips are disposed on the baseband board. As shown in FIG. 13, one chip is, for example, the baseband processor, and is connected to the memory 1305 through a bus interface, to call a program in the memory 1305 to perform the operations of the network side device shown in the foregoing method embodiment.

The network side device may further include a network interface 1306. The interface is, for example, a common public radio interface (common public radio interface, CPRI).

Specifically, the network side device 1300 of the embodiments of this application further includes: an instruction or a program stored in the memory 1305 and runnable on the processor 1304. The processor 1304 calls the instruction or the program in the memory 1305 to perform the method performed by each module shown in FIG. 9, and the same technical effects are achieved. To avoid repetition, details are not described herein again.

An embodiment of this application further provides a readable storage medium, storing a program or an instruction. The program or the instruction, when executed by a processor, implements the processes of the foregoing backscatter communication method embodiment, and the same technical effects can be achieved. To avoid repetition, details are not described herein again.

The processor is the processor in the terminal described in the foregoing embodiment. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or an instruction of a network side device to implement the processes of the foregoing backscatter communication method embodiment, and the same technical effects can be achieved. To avoid repetition, details are not described herein again.

It should be understood that, the chip mentioned in this embodiment of this application may also be referred to as a system on a chip, a system chip, a chip system, a system-on-chip, or the like.

An embodiment of this application further provides a computer program product. The computer program product includes a processor, a memory, and a program or an instruction stored in the memory and runnable on the processor. The program or the instruction, when executed by the processor, implements the processes of the foregoing backscatter communication method embodiment, and the same technical effects can be achieved. To avoid repetition, details are not described herein again.

An embodiment of this application further provides a backscatter communication system, including: a first device, a second device, and a network side device. The terminal may be configured to perform the steps of the methods described in the method embodiments 200 to 400 as described above. The network side device may be configured to perform the steps of the method described in the method embodiment 600 as described above. The second device may be configured to perform the steps of the method described in the method embodiment 700 as described above.

It should be noted that in this specification, the term "include", "comprise", or any other variant thereof is intended to cover a non-exclusive inclusion, so that a process, method, article, or apparatus including a series of elements includes not only those elements, but also other elements not expressly listed, or elements inherent to such a process, method, article, or apparatus. Without more restrictions, the elements defined by the sentence "including a ..." do not exclude the existence of other identical elements in the process, method, article, or apparatus including the elements. In addition, it should be noted that, the scope of the methods and apparatuses in the implementations of this application is not limited to performing the functions in the order shown or discussed, but may further include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions in the foregoing implementations, a person skilled in the art may clearly learn that the method according to the foregoing embodiment may be implemented by software plus a necessary universal hardware platform, or certainly, by using hardware. However, in many cases, the former is a preferred implementation. Based on such an understanding, the technical solutions of this application essentially or a part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods according to the embodiments of this application.

The embodiments of this application have been described above with reference to the accompanying drawings, but this application is not limited to the foregoing specific implementations. The foregoing specific implementations are only illustrative and not restrictive. Under the inspiration of this application, without departing from the purpose of this application and the scope of protection of the claims, a person of ordinary skill in the art can still make many forms, which all fall within the protection of this application.

## Claims

1. A backscatter communication method, comprising:
obtaining, by a first device, target configuration information, wherein the target configuration information comprises backscatter communication BSC-related configuration information; and
performing, by the first device, the backscatter communication with a second device according to the target configuration information, wherein the second device is a device that modulates to-be-transmitted information on a target carrier provided by a device other than the second device for transmission.

2. The method according to claim 1, wherein the obtaining, by a first device, target configuration information comprises at least one of the following:
obtaining, by the first device, the target configuration information through first signaling in a case that the first device is in a radio resource control RRC connected mode or an RRC active mode; or
autonomously determining, by the first device, the target configuration information according to preconfigured BSC-related configuration information in a case that the first device has no network connection or is without network coverage.

3. The method according to claim 1, wherein the obtaining, by the first device, the target configuration information through first signaling comprises:
receiving, by the first device, first signaling transmitted by a network side device, wherein the first signaling carries the target configuration information, wherein
the first signaling comprises any one of the following:
first RRC signaling;
second RRC signaling and first DCI, wherein the second RRC signaling is semi-static signaling, and the first DCI is used for activating or deactivating target configuration information corresponding to the second RRC signaling;
second downlink control information DCI, wherein the second DCI is scheduling signaling on a physical downlink control channel PDCCH and is used for dynamically scheduling the BSC-related configuration information of the first device; or
first Medium Access Control control element MAC CE signaling.

4. The method according to any one of claims 1 to 3, wherein the backscatter communication BSC-related configuration information comprises at least one of the following:
first configuration information, wherein the first configuration information is used for configuring relevant parameters of a radio frequency signal, and the radio frequency signal is used for supplying power to at least one second device, and/or the radio frequency signal is used for providing a target carrier to at least one second device;
second configuration information, wherein the second configuration information is used for configuring relevant parameters of a BSC control command; or
third configuration information, wherein the third configuration information is used for configuring relevant parameters for BSC signal transmission.

5. The method according to claim 4, wherein the performing, by the first device, the backscatter communication with a second device according to the target configuration information comprises:
transmitting, by the first device, the BSC-related configuration information or BSC-related control information to the at least one second device through second signaling in a case that the target configuration information comprises the second configuration information and that BSC control command enable switch indication information comprised in the second configuration information indicates ON.

6. The method according to claim 5, wherein the second signaling comprises at least one of the following:
third RRC signaling;
a second MAC CE;
first sidelink control information SCI; or
a first preamble sequence.

7. The method according to any one of claims 1 to 6, wherein the method further comprises:
reporting, by the first device, UE capability information to the network side device, wherein
the UE capability information is capability information of BSC-related communication supported by the first device.

8. The method according to claim 7, wherein the reporting, by the first device, UE capability information to the network side device comprises any one of the following:
reporting, by the first device, the UE capability information to the network side device in a case that the first device receives a UE capability enquiry instruction transmitted by the network side device; or
reporting, by the first device, the UE capability information to the network side device through UE assistance information UAI.

9. The method according to claim 7 or 8, wherein the UE capability information comprises at least one of the following:
a relevant capability of the first device for providing a radio frequency signal to at least one second device, wherein the radio frequency signal is used for supplying power to and/or providing a target carrier to the at least one second device;
a capability of the first device for transmitting a BSC control command; or
a wireless capability supported by the first device for BSC signal reception and transmission.

10. The method according to claim 9, wherein in a case that the radio frequency signal is used for supplying power to the at least one second device, the relevant capability for the radio frequency signal comprises at least one of a battery level of the first device, a waveform of a Radio Frequency signal for energy harvesting, a length of a Radio Frequency signal for energy harvesting, frequency information of a Radio Frequency signal for energy harvesting, or power information of a Radio Frequency signal for energy harvesting; or
in a case that the radio frequency signal is used for providing a target carrier to the at least one second device, the relevant capability for the radio frequency signal comprises at least one of a carrier signal waveform, a carrier signal length, carrier frequency information, or carrier power information that can be supported by the first device.

11. The method according to claim 9, wherein the capability of the first device for transmitting a BSC control command comprises at least one of a preamble synchronization sequence or the ability of control signaling with group scheduling that can be provided by the first device.

12. The method according to claim 9, wherein the wireless capability supported by the first device for BSC signal reception and transmission comprises at least one of a synchronization capability, a channel coding-decoding capability, a signal modulation-demodulation capability, an antenna capability, a precoding capability, or a bandwidth part BWP capability that is supported by the first device.

13. A backscatter communication method, comprising:
transmitting, by a network side device, target configuration information to a first device, wherein
the target configuration information comprises backscatter communication BSC-related configuration information, and the target configuration information is used for the backscatter communication with a second device by the first device, wherein the second device is a device that modulates to-be-transmitted information on a target carrier provided by a device other than the second device for transmission.

14. The method according to claim 13, wherein the transmitting, by a network side device, target configuration information to a first device comprises:
transmitting, by the network side device, first signaling to the first device, wherein the first signaling comprises at least the target configuration information, wherein
the first signaling comprises at least one of the following:
first RRC signaling;
second RRC signaling and first DCI, wherein the second RRC signaling is semi-static signaling, and the first DCI is used for activating or deactivating target configuration information corresponding to the second RRC signaling;
second downlink control information DCI, wherein the second DCI is scheduling signaling on a physical downlink control channel PDCCH and is used for dynamically scheduling the BSC-related configuration information of the first device; or
first Medium Access Control control element MAC CE signaling.

15. The method according to claim 13, wherein the backscatter communication BSC-related configuration information comprises at least one of the following:
first configuration information, wherein the first configuration information is used for configuring relevant parameters of a radio frequency signal, and the radio frequency signal is used for supplying power to at least one second device, and/or the radio frequency signal is used for providing a target carrier to at least one second device;
second configuration information, wherein the second configuration information is used for configuring relevant parameters of a BSC control command; or
third configuration information, wherein the third configuration information is used for configuring relevant parameters for BSC signal transmission.

16. The method according to claim 15, wherein the method further comprises:
transmitting, by the network device, the BSC-related configuration information or BSC-related control information to the at least one second device through third signaling in a case that the target configuration information comprises the second configuration information and that BSC control command enable switch indication information comprised in the second configuration information indicates OFF.

17. The method according to claim 16, wherein the third signaling comprises at least one of the following:
fourth RRC signaling;
a third MAC CE;
third DCI; or
a second preamble sequence.

18. The method according to any one of claims 13 to 17, wherein the method further comprises:
receiving, by the network side device, UE capability information transmitted by the first device, wherein the UE capability information is information about a BSC-related capability supported by the first device; and
determining, by the network side device, the target configuration information according to the UE capability information.

19. The method according to claim 18, wherein the receiving UE capability information transmitted by the first device comprises any one of the following:
transmitting, by the network side device, a UE capability enquiry instruction to the first device, and receiving the UE capability information transmitted by the first device; or
receiving, by the network side device, the UE capability information transmitted by the first device through UE assistance information UAI.

20. The method according to claim 18 or 19, wherein the method further comprises:
in a case that the network side device is an access network device, transmitting, by the access network device, the UE capability information to a core network device through UE capability indication information.

21. The method according to claim 18, wherein the UE capability information comprises at least one of the following:
a relevant capability of the first device for providing a radio frequency signal to at least one second device, wherein the radio frequency signal is used for supplying power to and/or providing a target carrier to the at least one second device;
a capability of the first device for transmitting a BSC control command; or
a wireless capability supported by the first device for BSC signal reception and transmission.

22. The method according to claim 21, wherein in a case that the radio frequency signal is used for supplying power to the at least one second device, the relevant capability for the radio frequency signal comprises at least one of a battery level of the first device, a waveform of a Radio Frequency signal for energy harvesting, a length of a Radio Frequency signal for energy harvesting, frequency information of a Radio Frequency signal for energy harvesting, or power information of a Radio Frequency signal for energy harvesting; or
in a case that the radio frequency signal is used for providing a target carrier to the at least one second device, the relevant capability for the radio frequency signal comprises at least one of a carrier signal waveform, a carrier signal length, carrier frequency information, or carrier power information that can be supported by the first device.

23. The method according to claim 21, wherein the capability of the first device for transmitting a BSC control command comprises at least one of a preamble synchronization sequence or the ability of control signaling with group scheduling that can be provided by the first device.

24. The method according to claim 21, wherein the wireless capability supported by the first device for BSC signal reception and transmission comprises at least one of a synchronization capability, a channel coding-decoding capability, a signal modulation-demodulation capability, an antenna capability, a precoding capability, or a bandwidth part BWP capability that is supported by the first device.

25. A backscatter communication method, comprising:
receiving, by a second device, second signaling transmitted by a first device, wherein the second signaling comprises at least BSC-related configuration information or BSC-related control information; or receiving, by a second device, third signaling transmitted by a network side device, wherein the third signaling comprises at least BSC-related configuration information or BSC-related control information, wherein the second device is a device that modulates to-be-transmitted information on a target carrier provided by a device other than the second device for transmission; and
performing, by the second device, backscatter transmission based on the BSC-related configuration information or the BSC-related control information.

26. The method according to claim 25, wherein the second signaling comprises at least one of the following:
third RRC signaling;
a second MAC CE;
first sidelink control information SCI; or
a first preamble sequence.

27. The method according to claim 25, wherein the third signaling comprises at least one of the following:
fourth RRC;
a third MAC CE;
third DCI; or
a second preamble sequence.

28. A backscatter communication apparatus, comprising:
an obtaining module, configured to obtain target configuration information, wherein the target configuration information comprises backscatter communication BSC-related configuration information; and
a communication module, configured to perform the backscatter communication with a second device according to the target configuration information, wherein the second device is a device that modulates to-be-transmitted information on a target carrier provided by a device other than the second device for transmission.

29. A backscatter communication apparatus, comprising:
a first transmission module, configured to transmit target configuration information to a first device, wherein
the target configuration information comprises backscatter communication BSC-related configuration information, and the target configuration information is used for the backscatter communication with a second device by the first device, wherein the second device is a device that modulates to-be-transmitted information on a target carrier provided by a device other than the second device for transmission.

30. A backscatter communication apparatus, comprising:
a second transmission module, configured to receive second signaling transmitted by a first device, wherein the second signaling comprises at least BSC-related configuration information or BSC-related control information; or receive third signaling transmitted by a network side device, wherein the second signaling comprises at least BSC-related configuration information or BSC-related control information, wherein
the second transmission module is further configured to perform backscatter transmission based on the BSC-related configuration information or the BSC-related control information.

31. A device, comprising a processor and a memory, wherein the memory stores a program or an instruction executable on the processor, and the program or the instruction, when executed by the processor, implements the steps of the backscatter communication method according to any one of claims 1 to 12 or implements the steps of the backscatter communication method according to any one of claims 25 to 27.

32. A network side device, comprising a processor and a memory, wherein the memory stores a program or an instruction executable on the processor, and the program or the instruction, when executed by the processor, implements the steps of the backscatter communication method according to any one of claims 13 to 24.

33. A readable storage medium, wherein the readable storage medium stores a program or an instruction, and the program or the instruction, when executed by a processor, implements the steps of the backscatter communication method according to any one of claims 1 to 12, or implements the steps of the backscatter communication method according to any one of claims 13 to 24, or implements the steps of the backscatter communication method according to any one of claims 25 to 27.
